# EUROPEAN PATENT SPECIFICATION

(11) **EP 1 325 618 B1**
(45) Date of publication and mention of the grant of the patent: **07.06.2006**
(21) Application number: 01985661.6
(22) Date of filing: 25.09.2001
(51) Int. Cl.: H04M 7/00, H04L 29/06, H04Q 7/22

(54) **METHOD FOR TRANSMISSION OF VOICE OVER WIRELESS PACKET-SWITCHED NETWORKS**
VERFAHREN ZUR ÜBERTRAGUNG VON SPRACHE ÜBER DRAHTLOSE PAKETVERMITTELNDE-NETZWERKE
TRANSMISSION DE LA VOIX SUR DES SYSTEMES A COMMUTATION PAR PAQUETS SANS FIL

(30) Priority: 26.09.2000 GB 0023645
(43) Date of publication of application: 09.07.2003
(73) Proprietor: MOTOROLA, INC., Schaumburg, IL 60196 (US)
(72) Inventor: FOSTER, Gerry, Swindon, Wiltshire SN1 4JP (GB); HOBBIS, Kevan, Swindon, Wiltshire SN5 9GL (GB); SESMUN, Amardiya, Swindon, Wiltshire SN5 8JL (GB); SHAMI, Sajjad, Swindon, Wiltshire SN5 6BU (GB)
(74) Representative: Jepsen, René Pihl
(86) International application number: PCT/EP2001/011164
(87) International publication number: WO 2002/028014

(56) References cited:
- NAPOLITANO-RICAGNI: "UMTS all-IP Mobility Management, Call and session control Procedure" INTERNET DRAFT, 24 March 2000 (2000-03-24), XP002149519
- "Universal Mobile Telecommunications System (UMTS);Feasibility Technical Report-CAMEL Control of VoIP Services (3G TR 21.978 version 3.0.0 Release 1999)" ETSI TR 121 978 V3.0.0, XX, XX, June 2000 (2000-06), pages 1-38, XP002155236
- GRANBOHM H ET AL: "GPRS - GENERAL PACKET RADIO SERVICE" ON - ERICSSON REVIEW, ERICSSON. STOCKHOLM, SE, no. 2, 1999, pages 82-88, XP000833940 ISSN: 0014-0171

## Description

This invention relates to telecommunications system and particularly to the transmission of voice over packet-switched systems.

At present business companies maintain two separate networks. One for their computers and the other for telephones and faxes. The former is based on packet-switch technology and connects the company's computers among themselves and to the outside world through the Internet. In this way, emails and file transfer is achieved at low cost. The latter is based on circuit-switch technology and connects the company's telephones and fax machines among themselves and the outside world through trunk exchanges. However, long distance voice and fax calls are expensive.

In a circuit switched system, when a user starts to make a call, a circuit is established between the user and the network which is maintained for the duration of the call with nobody else being able to use that particular resource for its duration .

In a packet switched system, no permanent connection is established. Instead, the user equipment collects data from the user until its buffer is full, then requests a short slot from the network to transmit the packet of data. It then relinquishes the network resources and waits for the buffer to fill again. Packet switching comes in two guises - connection oriented and non-connection oriented. In the case of connection oriented, a virtual circuit is established between the transmitter and the receiver, passing through the switching nodes when the first packet is received. All subsequent packets received for the same destination travel via the same route. Further, they will be received in the order in which they are transmitted. In the case of non-connection oriented, each packet is treated as if no previous packet had been sent. Potentially, a packet could be sent via a different route from the previous packet and hence the packets might not arrive at the receiver in the order that they were sent. The receiver then requires a sufficient buffer that it can correctly order the data prior to presenting it to the user.

Circuit switching provides a low and known delay but uses resources inefficiently compared to packet switching, Broadly, circuit switching is suitable for speech whilst packet switching is suitable for data. Known packet switching methods are unsuitable for speech because the delays suffered by each packet can be variable, resulting in significant and unwanted speech delay.

If all speech and fax calls could be made over the computer (data) network without the disadvantage of transmission delays, then considerable cost-savings could be achieved, plus there would be only one network to manage. Hence Packet-Voice, (also called Voice over IP (Internet Protocol) and IP Telephony) is a very attractive option.

Packet-voice is also being pursued in wireless/mobile communications for the third generation system known as Universal Telecommunications System (UMTS).

Examples of the use of packet-voice in UMTS systems are provided by 'UMTS all-IP Mobility Management, Call and Session Control Procedure' by Napolitano-Ricagni, Internet Draft, 24 March 2000 (2000-03-24), XP002149519 which describes mobile internet protocol management, and in 'Universal Mobile Telecommunications System (UMTS); Feasibility Technical Report-CAMEL Control of VolP Services (3G TR 21.978 version 3.0.0 Release 1999)' ETSI TR 121 978 V3.0.0, XX, XX, June 2000 (2000-06), pages 1-38, XP002155236 which describes the control of voice over internet protocol services."

In UMTS, a radio network controller (RNC) communicates with a number of base station transceivers (termed Node B's) which in turn commmunicate with a number of user terminals often termed user equipments (UE). The user equipment may be a mobile phone,lap-top computer, paging device etc. The user equipment, node B and RNC equate to the mobile station, base station transceiver and base station controller of the global communication system (GSM) or general packet radio system (GPRS).

Sending speech directly in the IP domain over the air interface in UMTS is possible but not efficient.

This invention aims to improve bandwidth efficiency over the air interface. (Mobile station to NodeB/RNC) while delivering voice over packet in UMTS networks.

According to a first aspect of the present invention there is provided a method for transmitting speech in a telecommunications network which includes a network controller and at least one user terminal having a user terminal address, the method including the steps of; at the user terminal, setting up a communications link with the network controller including the step of performing a packet switched attach procedure by providing to the network controller the user terminal address and the type of attach mode required , and sending speech samples to the network controller in a circuit switched mode, and at the network controller, acquiring an Internet Protocol Address for the user terminal, and performing a mapping between the user terminal address and the Internet Protocol address, converting the speech samples received from the user terminal to packetised speech, and transmitting the packetised speech to a remote part of the network.

According to a second aspect of the invention there is provided an apparatus for enabling transmission of speech in a telecommunications network, the apparatus including; means for initiating a radio bearer set-up procedure in response to receiving a packet switched attach procedure from a user terminal means for receiving circuit switched speech samples from the user terminal having a user terminal address, means for acquiring an Internet Protocol Address for the user terminal, a voice proxy means for mapping the user terminal address with an Internet protocol address, means for converting the received circuit switched speech into packetised speech, and means for transmitting the packetised speech to a remote part of the network.

According to a third aspect of the invention there is provided a user terminal having a user terminal address and adapted to transmit speech samples to a network controller in a telecommunications network, the user terminal including means for performing a packet switched attach procedure with the network controller by providing to the network controller the user terminal address and the type of attach mode required; wherein the user terminal is further operable to communicate the speech samples associated with the packet switched attach procedure in a circuit switched mode.

In one embodiment, the present invention proposes a new UMTS hybrid mode of attach whereby the speech bearer path from the mobile user is transported to NodeB/RNC in circuit mode and from there onwards in packet mode under a UMTS packet switch attach. The control signalling from the mobile user is sent over IP all the way to the core network. This is achieved by using a novel architecture, three protocol planes at generic level and basic signalling to be described in detail herebelow.

Hence the invention can provide a hybrid mode of (circuit/packet) speech service over UMTS. Conventional air-interface bearers are used but with IP multi-media based signaling.

The invention also can provide an optimised speech transmission path for UMTS using the best parts of both the existing packet switched and circuit switched domains in a novel way. It also provides an optimised air-interface for speech but can be extended to cover other real-time services, for example video.

From the mobile user right up to the core network, control signalling is implemented over IP.

Implementation of the invention can yield near optimal VoP performance. Advantageously, existing circuit switched transcoder and rate adaptation units (TRAUs) may be employed at the circuit gateway. Furthermore, no new compression technique is required over the air-interface and IP is used only where it is efficient to do so.

Some embodiments of the invention will now be described by way of example only, with reference to the drawings of which;
Fig. 1 is a schematic block diagram of a hybrid mode packet-voice architecture in accordance with the invention and suitable for UMTS release 2000;
Fig. 2 is an illustration showing UMTS control plane protocols for use in the architecture of Fig. 1,
Fig. 3 is an illustration showing hybrid transmission of-IP signalling protocols over the UMTS plane for use in the architecture of Fig. 1,
Fig. 4 is an illustration showing voice over packet transmission plane protocols for use in the architecture of Fig. 1, and
Fig. 5 is a signalling diagram illustrating the basic signalling involved in the operation of the invention.

The example described below relates to a call initiated by a user equipment but the invention can also apply to a call terminating at the user equipment.

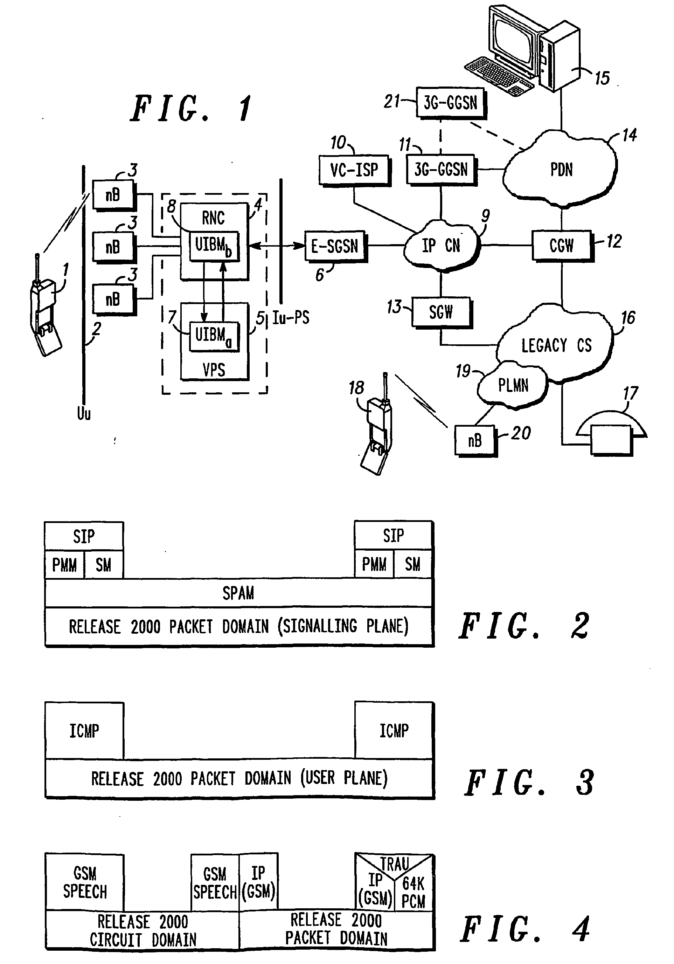

In Fig. 1, a user equipment (UE), which in this example is a mobile phone, 1 communicates across a UMTS interface Uu,2, with one of several node B's. 3.

Each node B 3 is linked to an RNC 4. Also linked to the RNC 4 is a voice proxy server (VPS) 5 and an enhanced GPRS support node function (E-SGSN) 6. The RNC 4 and the E-SGSN 6 communicate via an lu-packet switched interface lu-PS. The VPS and the RNC are each provided with a UMTS to IP bearer mapping functionality UIBMa, 7 and UIBMb, 8, respectively. These two modules 7, 8perform address mappings for both caller and callee to the IP address as required. The E-SGSN 6 is linked to an Internet Protocol core network, IP CN 9. The IP CN 9 has further links to a voice-capable internet service provider, VC-ISP 10, a third generation (UMTS) gateway GPRS support node, 3G-GGSN 11, a circuit gateway, CGW 12 and a signalling gateway, SGW 13. The 3G-GGSN 11 is connected to a packet data network PDN 14 which serves a user of a voice-capable computer terminal 15. The SGW 13 interfaces with a legacy circuit-switched system CS 16 which in turn serves a fixed telephone handset 17 and a mobile phone 18 via a public land mobile network, PLMN 19 and node B 20. A call-state control function 21 is linked to the 3G-GGSN 11.

The architecture of Fig. 1 enables the UE 1 to make UMTS optimised packet switched (Voice over Packet) voice calls of toll quality to fixed or mobile telephones through a legacy CS network 16 and also to voice-capable personal computers through the Internet or other packet data network 14. This is accomplished by operating a packet switch attach with optimised bearer path using the best of circuit switched and packet switched bearer controls.

The component called E-SGSN 6 is an entity which performs the serving GPRS support node function (SGSN) plus 0.408 Proxy, IP multi-media based call control protocol and existing legacy signalling. Note that 0.408 Proxy is a limited 0.408 stack of Packet Mobility Management and Session Management only. The mechanism builds on what came from a circuit-attach between UE 1 and RNC 4. Mobility is handled by packet mobility management. The setting up of a session is achieved by Session Management. In this example a session initiation protocol (SIP) is used to set up a speech call upon a particular session. This is implemented by incorporating a session initiation protocol architecture on the UE 1 and the E-SGSN in the network. The 0.408 Proxy (packet mobility management-session management) protocols are terminated inside the SGSN functionality which is embodied within the E-SGSN. The RNC 4 has a two-way connection to the Voice Proxy Server (VPS) 5 which acts as a UMTS IP Bearer Mapper (UIBM).

The UE 1 acquires a temporary IP address from the VC-ISP 10 in conjunction with the 3G-GGSN 11. The UIBM functionality enables the UE 1 to send speech in circuit mode up to the RNC 4 and in packet mode from the RNC 4 onwards. From the E-S GSN, the user speech is sent to the Core Network 9. If it is destined for a packet switched user then it goes directly to the relevant PDN 14 or Internet as appropriate. On the other hand if the destination is a circuit switched user then the signalling part is sent to the Signalling Gateway (SGW) 13 and the packet-speech part is sent to the Circuit Gateway (CGW) 12. The E-SGSN 6 controls the data path using an IP multimedia based call control model.

The SGW 13 is a signalling component that provides message exchanges between signalling system SS7-based circuit-switched networks and packet networks. It allows users to operate in a seamless environment for voice and data services. The CGW 12 is a network switching component that allows voice calls to be distributed from a packet-switched network to a circuit-switched one and vice versa. In addition, it performs GSM-to-PCM (pulse code modulation) (16 to 64kb/s) conversion and reverse; rate adaptation; equalisation; silence suppression; echo cancellation; tone detection and generation. The bearer path is controlled through Media Gateway Control Protocol (MGCP) from the session initiation protocol call model to the CGW 12 for circuit switched connection.

Figure 2 shows the protocols involved in the control plane in the hybrid signalling mode. All signalling IP messages are sent direct over the air-interface Common Channel (CCH). The Signal Processing and Address Management (SPAM) functionality, in the diagram, works over the packet domain as a thin layer to provide the necessary address mappings. It is not a protocol in its own right but a set of primitives at UE, RNC and E-SGSN. Other protocols used are the packet mobility management (PMM), session management (SM) and an IP multimedia call control eg session initiation protocol (SIP).

Figure 3 shows the protocols involved in the user transmission plane for user IP signalling relay. The user data is transmitted end-to-end over the IP domain using the air-interface Dedicated Channel (DCH). The signalling is transparent to E-SGSN/ Routers/ GGSN unless internet Control Message Protocol (ICMP) is applicable to them for user originated control.

Figure 4 shows the Voice-over-Packet (VoP) transmission protocols between the UE and the circuit gateway CGW. The UE transmits GSM speech over the air-interface DCH in circuit domain (UMTS Release 99/00) which at the RNC is converted into IP packetised GSM speech. This is transported over the packet domain (UMTS Release 2000) to the CGW where it can be sent directly to other PLMN(s) or to circuit clients through the Transcoder and Rate Adaption Unit (TRAU) protocol that converts the IP speech to 64kb/s PCM. The VoP bearer traffic is transparent to the E-SGSN and GGSN functionality.

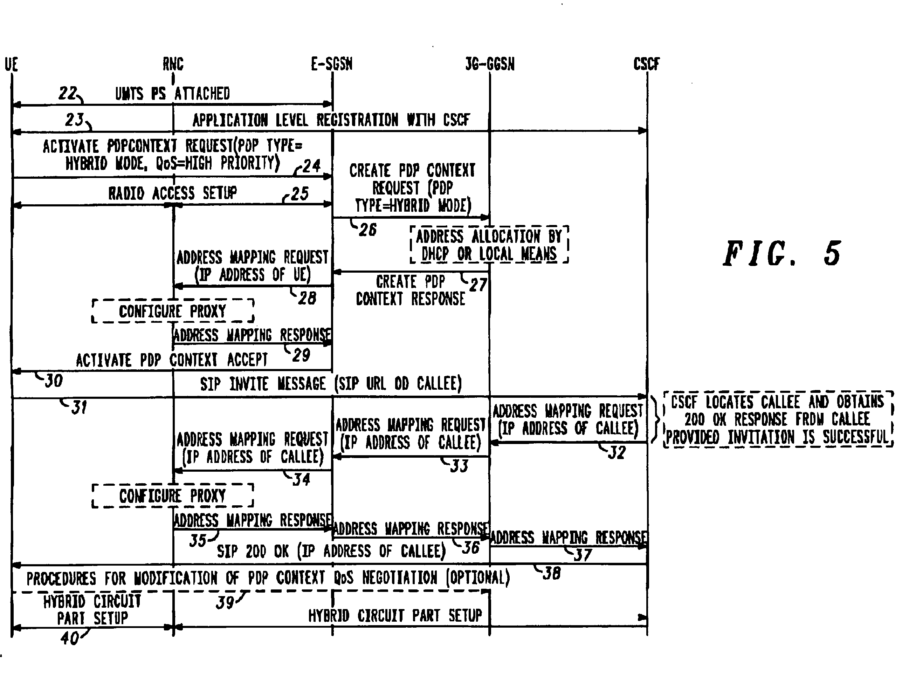

### The signalling steps shown in Figure 5 are explained below:

### Step 22. Packet-Switched Attach

The UE performs a UMTS packet-switched attach procedure by providing to the E-SGSN its radio network identity and the type of attach mode required in order to access the packet-switched services. This assumes that the UE was in a packet mobility management PMM-detached state. Upon packet switch attach, the UE moves to the PMM-connected state. Mobility Management contexts are set up at the UE and the E-SGSN.

### Step 23. Application Level Registration

The UE does an application level registration with a CSCF to inform the CSCF of its presence.

### Step 24. Activate PDP Context Request

A packet data protocol PDP context contains mapping and routing information. The UE sends an Activate PDP Context Request to the E-SGSN with standard parameters except for the PDP type, which is set to a value indicating the hybrid mode. The highest quality of service is also requested. The PDP address may be left empty if the UE is requesting allocation of an IP address.

### Step 25. Radio Bearer Setup

The E-SGSN sends a Radio Bearer Setup Request message to RNC. The RNC then initiates the radio bearer setup procedure over a Dedicated Shared Channel (DSCH) connecting the UE to accommodate the ongoing signaling to complete the PDP Context (virtual mapping). The RNC also sets up an lu bearer.

### Step 26. Create PDP Context Request

The E-SGSN sends a Create PDP Context Request to the 3G-GGSN with the parameters obtained from the Activate PDP Context Request. If required, the 3G-GGSN obtains an IP address for the UE using DHCP. (Dynamic host configuration protocol).

### Step 27. Create PDP Context Response

The 3G-GGSN then returns a Create PDP Context Response message with relevant parameters to the SGSN.

### Step 28. Address Mapping Request

On receiving the Create PDP Context Response from the 3G-GGSN, the E-SGSN initiates a new message, dictating the RNC to map the identity of the UE to the IP address provided. This new message takes, as parameters, the identity of the terminal and its IP address. Note that the identity field of this message could be an E.164 number e.g. IMSI or based on a domain name e.g. SIP URL (Uniform Resource Locator). In this instance, the identity refers to the UMTS identity of the terminal. The RNC configures its proxy server to include an entry indicating a mapping between identity and IP address of user.

### Step 29. Address Mapping Response

After configuring the proxy, the RNC informs the E-SGSN.

### Step 30. Activate PDP Context Accept

The E-SGSN inserts the PDP Address received from the GGSN in its context. The SGSN selects Radio Priority and Packet Flow Id based on QoS Negotiated, and returns an Activate PDP Context Accept message with relevant parameters to the UE. The E-SGSN is now able to route PDP packet data units between the 3G-GGSN and the UE.

### Step 31. SIP Invite Message

In this example, SIP is used. The UE sends a SIP INVITE message that contains the SIP URL of the callee to the CSCF.

### Step 32. CSCF -> 3G-GGSN Address Mapping Request

When the CSCF receives a SIP INVITE message, it initiates procedures for locating the callee and obtaining its IP address. If the invitation is successful, the CSCF receives a 200 OK message, which contains the IP address of the callee or entity via which the call can be set up e.g. a gateway. The CSCF then needs to send an Address Mapping Request message to the 3G-GGSN.

### Step 33. 3G-GGSN -> E-SGSN Address Mapping Request

The 3G-GGSN sends a new GTP-C message - Address Mapping Request to the E-SGSN, giving the SIP URL and the IP address of the callee.

### Step 34. E-SGSN -> RNC Address Mapping Request

The E-SGSN then initiates the new RANAP message - Address Mapping Request - with the SIP URL and IP address of the callee as parameters and sends the message to the RNC. This causes the RNC to add another entry in the proxy server.

### Step 35. RNC -> E-SGSN Address Mapping Response

An Address Mapping Response is required as a response to the Address Mapping Request to indicate whether the eventual procedure of configuring the proxy at the RNC was successful or not.

### Step 36. E-SGSN -> 3G-GGSN Address Mapping Response

The E-SGSN relays the response from the RNC using a new GTP-C Address Mapping Response message.

### Step 37. 3G-GGSN -> CSCF Address Mapping Response

The 3G-GGSN provides the necessary confirmation to the CSCF regarding the proxy configured at the RNC.

### Step 38. SIP 200 OK Message

The CSCF sends a SIP 200 OK message to the UE, that contains the IP address of the callee thereby confirming to the UE the readiness of the callee to receive a call.

### Step. 39. Modification procedures

At this stage, procedures for modification of PDP context QoS negotiation can be activated, if required. This step is optional.

### No. 40. UE Call by Hybrid Mode

Note that this is not a call flow step. Following set-up of the call, the UE communicates in circuit-mode to the RNC. The RNC converts the received speech samples to IP packets by adding an IP header, setting 'source' to the IP address of the UE and 'destination' to the IP address of the callee. It then sends the packets to the called party.

## Claims

1. A method for transmitting speech in a telecommunications network which includes a network controller (4) and at least one user terminal (1) having a user terminal address, the method **characterized by** the steps of;
at the user terminal (1),
setting up (22-25) a communications link with the network controller (4), including the step of performing a packet switched attach procedure by providing to the network controller (4) the user terminal address and the type of attach mode required, and
sending speech samples to the network controller (4) in a circuit switched mode, and
at the network controller (4),
acquiring (26, 27) an internet Protocol Address for the user terminal (1), and
performing (28, 29) a mapping between the user terminal address and the Internet Protocol address, converting (40) the speech samples received from the user terminal to packetised speech, and transmitting (40) the packetised speech to a remote part of the network (14-20).

2. A method as claimed In claim 1 including the further steps of establishing (22) a mobility management context at the user terminal and the network controller and in the user terminal, activating (24) a new hybrid packet data protocol context type.

3. A method as claimed in any of claims 1 to 2 in which the step (26, 27) of acquiring an Internet Protocol Address includes the step of receiving (26) an Activate Packet Data Protocol Context Request from the user terminal.

4. A method as claimed in claim 3 In which the packet data protocol context includes mapping and routing information.

5. A method as claimed in claim 3 or 4 including the further step of, in the network controller, initiating (25) a radio bearer set-up procedure.

6. A method as claimed in claim 6 in which the radio bearer set-up procedure is performed over a dedicated shared channel.

7. A method as claimed in any preceding claim including the further step in the network controller, of acquiring (32) an internet Protocol address for a callee.

8. A method as claimed in claim 8 in which the step of converting (40) includes (34, 35) adding to the packetised speech, an Internet Protocol header, Internet protocol address of the user terminal and Internet protocol address of the callee.

9. An apparatus for enabling transmission of speech in a telecommunications network, the apparatus **characterized by** comprising:
means (4) for initiating a radio bearer set-up procedure in response to receiving packet switched attach procedure from a user terminal,
means (4) for receiving circuit switched speech samples from the user terminal (1) having a user terminal address, means (11) for acquiring an Internet Protocol Address for the user terminal (1), a voice proxy means (5) for mapping the user terminal address with an Internet protocol address, means (4) for converting the received circuit switched speech into packetised speech, and means (4, 6, 9-21) for transmitting the packetised speech to a remote part of the network.

10. An apparatus as claimed in claim 9 and further including means for acquiring an Internet protocol address for a callee.

11. An apparatus as claimed in claim 10 in which the means (4) for converting includes means (6, 11) for adding to the packetised speech, an Internet protocol header, Internet protocol address of the user terminal and internet Protocol address of the callee.

12. A user terminal (1) having a user terminal address and adapted to transmit speech samples to a network controller (4) in a telecommunications network, the user terminal (1) **characterized by** comprising means for performing a packet switched attach procedure with the network controller (4) by providing to the network controller the user terminal address and the type of attach mode required; wherein the user terminal is further operable to communicate the speech samples associated with the packet switched attach procedure in a circuit switched mode,

13. A user terminal (1) as claimed in claim 12 and further including means (6) for establishing a mobility management context and activating and transmitting a packet data protocol context.

## Patentansprüche

1. Verfahren zum Übermitteln von Sprache in einem Telekommunikationsnetzwerk, welches einen Netzwerk-Controller (4) und wenigstens ein Benutzerendgerät (1) mit einer Benutzerendgeräteadresse enthält, wobei das Verfahren **gekennzeichnet ist durch** die Schritte:
am Benutzerendgerät (1):
Einrichten (22-25) einer Kommunikationsverbindung mit dem Netzwerk-Controller (4), umfassend den Schritt des Durchführens einer paketvermittelten Anmeldeprozedur **durch** Bereitstellen der Benutzerendgeräteadresse und des Typs des erforderlichen Anmeldungsmodus für den Netzwerk-Controller (4), und
Senden von Sprach-Samples an den Netzwerk-Controller (4) in einem leitungsvermittelten Modus und
am Netzwerk-Controller (4):
Erlangen (26, 27) einer Internetprotokoll-Adresse für das Benutzerendgerät (1) und
Durchführen (28, 29) einer Zuordnung zwischen der Benutzerendgeräteadresse und der Internetprotokoll-Adresse, Umwandeln (40) der von dem Benutzerendgerät her empfangenen Sprach-Samples in paketierte Sprache und Senden (40) der paketierten Sprache an einen entfernten Teil des Netzwerks (14-20).

2. Verfahren wie in Anspruch 1 beansprucht, umfassend die weiteren Schritte des Etablierens (22) eines Mobilitätsverwaltungskontextes an dem Benutzerendgerät und dem Netzwerk-Controller und Aktivieren (24), in dem Benutzerendgerät eines neuen Hybrid-Paketdatenprotokoll-Kontexttyps.

3. Verfahren wie in einem der Ansprüche 1 bis 2 beansprucht, wobei der Schritt (26, 27) des Erlangens einer Internetprotokoll-Adresse den Schritt des Empfangens (26) einer Paketdaten-Protokollkontextaktivierungs-Anforderung von dem Benutzerendgerät her umfasst.

4. Verfahren nach Anspruch 3, wobei der Paketdaten-Protokollkontext Zuordnungs- und Routing-Information enthält.

5. Verfahren wie in Anspruch 3 oder 4 beansprucht, umfassend den weiteren Schritt des Initiierens (25), in dem Netzwerk-Controller, einer Funkträgereinrichtungsprozedur.

6. Verfahren wie in Anspruch 6 beansprucht, wobei die Funkträgereinrichtungsprozedur über einen speziellen, gemeinsam genutzten Kanal durchgeführt wird.

7. Verfahren wie in einem der vorangehenden Ansprüche beansprucht, umfassend den weiteren Schritt des Erlangens (32), in dem Netzwerk-Controller, einer Internetprotokoll-Adresse für den Angerufenen.

8. Verfahren wir in Anspruch 8 beansprucht, wobei der Schritt des Umwandelns (40) ein Hinzufügen (34, 35) eines Internetprotokoll-Headers, einer Internetprotokoll-Adresse des Benutzerendgerätes und einer Internetprotokoll-Adresse des Angerufenen zu der paketierten Sprache enthält.

9. Vorrichtung zum Ermöglichen einer Übertragung von Sprache in einem Telekommunikationsnetzwerk, wobei die Vorrichtung **dadurch gekennzeichnet ist, dass** sie umfasst:
Mittel (4) zum Initiieren einer FunkträgerEinrichtungsprozedur als Antwort auf ein Empfangen einer paketvermittelten Anmeldeprozedur von einem Benutzerendegerät,
Mittel (4) zum Empfangen von leitungsvermittelten Sprach-Samples von dem Benutzerendgerät (1), welches eine Benutzerendgeräteadresse aufweist, Mittel (11) zum Erlangen einer Internetprotokoll-Adresse für das Benutzerendegerät (1), Sprach-Proxy-Mittel (5) zum Zuordnen der Benutzerendgeräteadresse zu einer Internetprotokoll-Adresse, Mittel (4) zum Umwandeln der empfangenen, leitungsvermittelten Sprache in paketierte Sprache und Mittel (4, 6, 9-21) zum Senden der paketierten Sprache an einen entfernten Teil des Netzwerks.

10. Vorrichtung wie in Anspruch 9 beansprucht, und weiter umfassend:
Mittel zum Erlangen einer Internetprotokolladresse für den Angerufenen.

11. Vorrichtung wie in Anspruch 10 beansprucht, wobei die Mittel (4) zum Umwandeln Mittel (6, 11) zum Hinzufügen eines Internetprotokoll-Headers, einer Internetprotokoll-Adresse des Benutzerendgerätes und einer Internetprotokoll-Adresse des Angerufenen zu der paketierten Sprache umfassen.

12. Benutzerendgerät (1) mit einer Benutzerendgeräteadresse und eingerichtet, Sprach-Samples an einen Netzwerk-Controller (4) in einem Telekommunikationsnetzwerk zu senden, wobei das Benutzerendgerät (1) **dadurch gekennzeichnet ist, dass** es umfasst: Mittel zum Durchführen einer paketvermittelten Anmeldeprozedur mit dem Netzwerk-Controller (4) durch Bereitstellen der Benutzerendgeräteadresse und des Typs des erforderlichen Anmeldungsmodus für den Netzwerk-Controller, wobei das Benutzerendgerät weiter betreibbar ist, die zu der paketvermittelten Anmeldeprozedur gehörigen Sprach-Samples in einem leitungsvermittelten Modus zu kommunizieren.

13. Benutzerendgerät (1) wie in Anspruch 12 beansprucht, und weiter umfassend: Mittel (6) zum Etablieren eines Mobilitätsverwaltungskontextes und zum Aktivieren und Senden eines Paketdaten-Protokollkontextes.

## Revendications

1. Procédé pour transmettre la parole dans un réseau de télécommunications qui inclut un contrôleur de réseau (4) et au moins un terminal d'utilisateur (1) ayant une adresse de terminal d'utilisateur, le procédé étant **caractérisé par** les étapes consistant à :
au niveau du terminal d'utilisateur (1),
établir (22-25) une liaison de communications avec le contrôleur de réseau (4), incluant l'étape consistant à effectuer une procédure de connexion à commutation de paquets en fournissant au contrôleur de réseau (4) l'adresse de terminal d'utilisateur et le type de mode de connexion requis, et
envoyer des échantillons de parole au contrôleur de réseau (4) dans un mode à commutation de circuits, et
au niveau du contrôleur de réseau (4),
acquérir (26, 27) une adresse de protocole Internet pour le terminal d'utilisateur (1), et
effectuer (28, 29) un mappage entre l'adresse de terminal d'utilisateur et l'adresse de protocole Internet, convertir (40) les échantillons de parole reçus du terminal d'utilisateur en parole en paquets, et transmettre (40) la parole en paquets à une partie distante du réseau (14-20).

2. Procédé tel que revendiqué dans la revendication 1, incluant les étapes supplémentaires consistant à établir (22) un contexte de gestion de la mobilité au niveau du terminal d'utilisateur et du contrôleur de réseau et dans le terminal d'utilisateur, activer (24) un nouveau type de contexte de protocole de données par paquets hybride.

3. Procédé tel que revendiqué dans l'une quelconque des revendications 1 à 2, dans lequel l'étape (26, 27) consistant à acquérir une adresse de protocole Internet inclut l'étape consistant à recevoir (26) une requête d'activation de contexte de protocole de données par paquets du terminal d'utilisateur.

4. Procédé tel que revendiqué dans la revendication 3, dans lequel le contexte de protocole de données par paquets inclut des informations de mappage et de routage.

5. Procédé tel que revendiqué dans la revendication 3 ou 4, incluant l'étape supplémentaire consistant à, dans le contrôleur de réseau, initier (25) une procédure d'établissement de support radio.

6. Procédé tel que revendiqué dans la revendication 5, dans lequel la procédure d'établissement de support radio est effectuée sur un canal partagé dédié.

7. Procédé tel que revendiqué dans l'une quelconque des revendications précédentes, incluant l'étape supplémentaire dans le contrôleur de réseau, consistant à acquérir (32) une adresse de protocole Internet pour un appelé.

8. Procédé tel que revendiqué dans la revendication 7, dans lequel l'étape de conversion (40) inclut (34, 35) l'ajout à la parole en paquets d'un en-tête de protocole Internet, de l'adresse de protocole Internet du terminal d'utilisateur et de l'adresse de protocole Internet de l'appelé.

9. Appareil pour permettre la transmission de parole dans un réseau de télécommunications, l'appareil étant **caractérisé en ce qu'**il comprend :
des moyens (4) pour initier une procédure d'établissement de support radio en réponse à la réception d'une procédure de connexion à commutation de paquets d'un terminal d'utilisateur,
des moyens (4) pour recevoir des échantillons de parole à commutation de circuits du terminal d'utilisateur (1) ayant une adresse de terminal d'utilisateur, des moyens (11) pour acquérir une adresse de protocole Internet pour le terminal d'utilisateur (1), des moyens mandataires vocaux (5) pour mapper l'adresse de terminal d'utilisateur avec une adresse de protocole Internet, des moyens (4) pour convertir la parole à commutation de circuits reçue en parole en paquets, et des moyens (4, 6, 9-21) pour transmettre la parole en paquets à une partie distante du réseau.

10. Appareil tel que revendiqué dans la revendication 9 et incluant en outre des moyens pour acquérir une adresse de protocole Internet pour un appelé.

11. Appareil tel que revendiqué dans la revendication 10, dans lequel les moyens (4) pour convertir incluent des moyens (6, 11) pour ajouter à la parole en paquets, un en-tête de protocole Internet, l'adresse de protocole Internet du terminal d'utilisateur et l'adresse de protocole Internet de l'appelé.

12. Terminal d'utilisateur (1) ayant une adresse de terminal d'utilisateur et adapté pour transmettre des échantillons de parole à un contrôleur de réseau (4) dans un réseau de télécommunications, le terminal d'utilisateur (1) étant **caractérisé en ce qu'**il comprend des moyens pour effectuer une procédure de connexion à commutation de paquets avec le contrôleur de réseau (4) en fournissant au contrôleur de réseau l'adresse de terminal d'utilisateur et le type de mode de connexion requis ; dans lequel le terminal d'utilisateur est en outre exploitable pour communiquer les échantillons de parole associés à la procédure de connexion à commutation de paquets dans un mode à commutation de circuits.

13. Terminal d'utilisateur (1) tel que revendiqué dans la revendication 12 et incluant en outre des moyens (6) pour établir un contexte de gestion de la mobilité et activer et transmettre un contexte de protocole de données par paquets.
